# EUROPÄISCHE PATENTSCHRIFT

(11) **EP 3 586 072 B1**
(45) Veröffentlichungstag und Bekanntmachung des Hinweises auf die Patenterteilung: **01.05.2024**
(21) Anmeldenummer: 18726067.4
(22) Anmeldetag: 30.04.2018
(51) Int. Cl.: F25B 7/00, F25B 25/00, F25B 30/02, F25B 30/06

(54) **VORRICHTUNG UND VERFAHREN ZUR ERHÖHUNG DER WÄRMEAUSBEUTE EINER WÄRMEQUELLE**
DEVICE AND METHOD FOR INCREASING THE HEAT YIELD OF A HEAT SOURCE
DISPOSITIF ET PROCÉDÉ POUR ACCROÎTRE LE RENDEMENT THERMIQUE D'UNE SOURCE DE CHALEUR

(30) Priorität: 12.05.2017 DE 102017208079
(43) Veröffentlichungstag der Anmeldung: 01.01.2020
(73) Patentinhaber: Siemens Energy Global GmbH & Co. KG, 81739 München (DE)
(72) Erfinder: REISSNER, Florian, 90425 Nürnberg (DE); SCHÄFER, Jochen, 90408 Nürnberg (DE)
(86) Internationale Anmeldenummer: PCT/EP2018/061001
(87) Internationale Veröffentlichungsnummer: WO 2018/206334

(56) Entgegenhaltungen:
- EP-A1- 0 523 684
- EP-A1- 2 511 627
- US-A1- 2008 196 431
- US-A1- 2014 262 146
- US-A1- 2016 370 017

## Beschreibung

Die Erfindung betrifft eine Vorrichtung gemäß dem Oberbegriff des Patentanspruches 1 sowie ein Verfahren gemäß dem Oberbegriff des Patentanspruches 8.

Nach dem Stand der Technik wird Abwärme von Industrieprozessen oder Wärme von geothermischen Quellen verwendet, um Wärme für einen Wärmeverbraucher bereitzustellen, das heißt an eine Wärmesenke abzugeben. Hierbei wird die Wärme typischerweise mittels eines Wärmeübertragers oder einer zusätzlichen Wärmepumpe an die Wärmesenke übertragen.

Wird die von einer Wärmequelle bereitgestellte Wärme auf die Wärmesenke mittels eines Wärmetauschers übertragen, so weist die Wärmesenke typischerweise bezüglich des genannten Wärmetauschers einen Wärmesenkenrücklauf und einen Wärmesenkenvorlauf für ein Fluid auf. Hierbei weist der Wärmesenkenrücklauf eine geringere Temperatur als der Wärmesenkenvorlauf auf. Mit anderen Worten wird wenigstens ein Teil der Wärme von der Wärmesenke verbraucht.

Gleichermaßen weist die Wärmequelle typischerweise bezüglich des Wärmetauschers einen Wärmequellenrücklauf sowie einen Wärmequellenvorlauf auf. Hierbei ist die Temperatur des Wärmequellenvorlaufes aufgrund der Übertragung von Wärme mittels des Wärmetauschers größer als die Temperatur des Wärmequellenrücklaufes.

Aus dem Stand der Technik sind dazu bereits die Druckschriften EP 0 523 684 A1 und EP 2 994 699 B1 bekannt. Die EP 0 523 684 A1 offenbart eine Vorrichtung zur Erhöhung der Wärmeausbeute einer Wärmequelle gemäß dem Oberbegriff von Anspruch 1 und ein Verfahren zur Erhöhung der Wärmeausbeute einer Wärmequelle gemäß dem Oberbegriff von Anspruch 8 und beschreibt die Wärmerückgewinnung aus der Abluft eines Hackschnitzeltrockners mittels einer Wärmepumpe. Um die Wärmepumpe in ihrer Leistung zu steuern, ist in den Wärmequellenkreislauf eine Bypassleitung vorgesehen, um die Wärmesenke zu umgehen. Die EP 2 994 699 B1 beschreibt das Bereitstellen von Wärme für eine Fernwärmeversorgung mit einer Geothermiequelle. Offenbart sind zwei thermische Speicher, die als Puffer zwischen Geothermiequelle und der Wärmepumpe, und zwischen der Wärmepumpe und des Fernwärmenetzes dienen.

Nachteilig an Wärmepumpenanwendungen ist jedoch, dass durch die thermische Kopplung der Wärmequelle mit der Wärmesenke mittels des Wärmetauschers die Temperatur des Wärmequellenrücklaufes durch die Temperatur des Wärmesenkenrücklaufes beschränkt ist. Mit anderen Worten kann die Temperatur des Wärmequellenrücklaufes nicht weiter abgekühlt werden, wenn die Wärme an die Wärmesenke übertragen werden soll.

Weiterhin ist die Temperatur des Wärmesenkenvorlaufes durch die Temperatur des Wärmequellenvorlaufes beschränkt. Aus den genannten Beschränkungen ergibt sich der Nachteil, dass die Wärmequelle bezüglich ihres Wärmeinhaltes nicht vollständig genutzt werden kann. Mit anderen Worten ist dadurch die Wärmeausbeute der Wärmequelle beschränkt.

Der vorliegenden Erfindung liegt die Aufgabe zu Grunde, die Wärmeausbeute einer Wärmequelle zu verbessern.

Die Aufgabe wird durch eine Vorrichtung mit den Merkmalen des unabhängigen Patentanspruches 1 sowie durch ein Verfahren mit den Merkmalen des unabhängigen Patentanspruches 8 gelöst. In den abhängigen Patentansprüchen sind vorteilhafte Ausgestaltungen und Weiterbildungen der Erfindung angegeben.

Die erfindungsgemäße Vorrichtung zur Erhöhung der Wärmeausbeute einer Wärmequelle umfasst wenigstens
- eine Wärmesenke und eine Wärmepumpe mit einem Kondensator und einem Verdampfer;
- einen Wärmetauscher, der mit der Wärmequelle über einen Wärmequellenvorlauf sowie einen Wärmequellenrücklauf thermisch verbindbar ist, wobei
- die Wärmesenke einen Wärmesenkenvorlauf und einen Wärmesenkenrücklauf aufweist, und die Wärmesenke über den Wärmesenkenvorlauf und den Wärmesenkenrücklauf mit dem Wärmetauscher verbunden und thermisch gekoppelt ist, und
- der Verdampfer der Wärmepumpe zur Wärmeaufnahme stromaufwärs des Wärmetauschers thermisch mit dem Wärmesenkenrücklauf (22) gekoppelt ist. Erfindungsgemäß weist die Vorrichrung eine Bypassleitung auf, wobei die Bypassleitung einen Teil des Wärmesenkenrücklaufs stromaufwärts des Verdampfers abzweigt, mit dem Kondensator der Wärmepumpe thermisch gekoppelt ist und stromabwärs des Kondensators mit dem Wärmesenkenvorlauf zusammengeführt wird.

Der Wärmesenkenvorlauf und der Wärmesenkenrücklauf bilden typischerweise einen Wärmesenkenkreislauf für ein Fluid aus, wobei das Fluid des Wärmesenkenrücklaufes wenigstens mittels des Wärmetauschers erwärmt wird. Nach dessen Erwärmung durch den Wärmetauscher wird der Wärmesenkenrücklauf zum Wärmesenkenvorlauf. Somit weist der Wärmesenkenvorlauf eine im Vergleich zur Temperatur des Wärmesenkenrücklaufes höhere Temperatur auf.

Der Wärmequellenvorlauf und der Wärmequellenrücklauf können für eine Fluid einen Wärmequellenkreislauf ausbilden, wobei das Fluid des Wärmequellenvorlaufes wenigstens mittels des Wärmetauschers abgekühlt wird und seine Wärme wenigstens teilweise auf den Wärmesenkenrücklauf zur Bildung des Wärmesenkenvorlaufes übertragen wird. Nach der Abkühlung des Wärmequellenvorlaufes durch den Wärmetauscher wird der Wärmequellenvorlauf zum Wärmequellenrücklauf. Der Wärmequellenrücklauf kann alternativ oder ergänzend teilweise oder vollständig abgeführt und somit teilweise oder vollständig nicht zur Wärmequelle rückgeführt werden.

Relative Anordnungen, beispielsweise die Anordnung eines Elementes direkt vor oder direkt nach einem weiteren Element der Vorrichtung, beziehen sich auf eine Richtung eines Kreislaufes und/oder auf eine Strömungsrichtung eines Fluids, beispielsweise auf eine Richtung eines Wärmesenkenkreislaufes. Der Wärmesenkenkreislaufes ist mittels des Wärmesenkenvorlaufes und des Wärmesenkenrücklaufes gebildet.

Die erfindungsgemäße Vorrichtung ist insbesondere dadurch gekennzeichnet, dass der Verdampfer, der thermisch mit dem Wärmesenkenrücklauf gekoppelt ist, eine Reduzierung der Temperatur des Wärmesenkenrücklaufes ermöglicht. Dadurch wird die Wärmequelle weiter abgekühlt, sodass sich vorteilhafterweise die Wärmeausbeute erhöht. Hierzu ist der Verdampfer vorteilhafterweise nicht im direkten Kontakt zur Wärmequelle. Dadurch kann der Verdampfer für bestehende Anlagen nachgerüstet werden, ohne in die Wärmequelle apparativ einzugreifen.

Die dem Wärmesenkenrücklauf mittels des Verdampfers entzogene Wärme wird mittels des Kondensators der Wärmepumpe auf den Wärmesenkenvorlauf übertragen. Dadurch kann vorteilhafterweise die Wärmequelle verbessert bezüglich ihres Wärmeinhaltes genutzt werden und somit mehr Wärme beziehungsweise eine erhöhte Wärmeleistung oder eine erhöhte Temperatur für die Wärmesenke bereitgestellt werden. Mit anderen Worten wird durch die erfindungsgemäße Einbindung der Wärmepumpe in den Wärmesenkenkreislauf der Wärmesenkenrücklauf weiter abgekühlt sowie der Wärmesenkenvorlauf weiter erwärmt.

Bei einer industriellen Abwärmequelle (Wärmequelle) muss der Wärmequellenrücklauf gemäß des Standes der Technik mittels Kühleinrichtungen, insbesondere Kühltürme, gekühlt werden, bevor dieser, beispielsweise als Abwasserstrom, abgeführt werden kann. Durch die erfindungsgemäß vorgesehene weitere Abkühlung des Wärmesenkenrücklaufes wird folglich der Wärmequellenrücklauf stärker abgekühlt, sodass vorteilhafterweise aufwendige und kostenintensive Kühlvorrichtungen zur Kühlung des Wärmequellenrücklaufes entfallen. Zusätzlich wird vorteilhafterweise die Temperatur des Wärmesenkenvorlaufes mittels des Kondensators der Wärmepumpe erhöht. Dadurch wird die Abwärmequelle verbessert bezüglich ihres Wärmeinhaltes genutzt.

Bei einer Geothermiequelle (geothermischen Wärmequelle) wird deren Wärmequellenrücklauf stärker ausgekühlt, sodass vorteilhafterweise ihre Wärmeausbeute verbessert wird. Weiterhin besteht für eine Geothermiequelle ein Fündigkeitsrisiko. Dieses Risiko beinhaltet die Tatsache, dass nicht mit ausreichender Sicherheit die Temperatur und der mögliche Massenstrom des Thermalwassers aus dem Bohrloch vorhergesagt werden kann. Die vorliegende Erfindung kann das genannte Risiko deutlich reduzieren oder das Abschließen von teuren Versicherungen verhindern.

Das erfindungsgemäße Verfahren zur Erhöhung der Wärmeausbeute einer Wärmequelle mit einer Vorrichtung gemäß der vorliegenden Erfindung oder einer ihrer Ausgestaltungen umfasst wenigstens die folgenden Schritte:
- Wärmeübertragen von der Wärmequelle auf den Wärmesenkenrücklauf mittels des Wärmetauschers; und
- Wärmeübertragen von dem Wärmesenkenrücklauf auf den Wärmesenkenvorlauf mittels des Verdampfers der Wärmepumpe und dem Kondensator, gekennzeichnet dadurch, dass ein Teil des Wärmesenkenrücklaufs stromaufwärts des Verdampfers in die Bypassleitung abgezweigt wird, und stromabwärz des Kondensators mit dem Wärmesenkenvorlauf zusammengeführt wird, wobei das Wärmeübertragen von dem Wärmesenkenrücklauf auf den Wärmesenkenvorlauf über die Bypassleitung erfolgt.

Gemäß einer vorteilhaften Ausgestaltung der Erfindung umfasst die Vorrichtung die Wärmequelle, wobei der Wärmesenkenrücklauf nach dem Verdampfer, insbesondere direkt nach dem Verdampfer der Wärmepumpe, mittels des Wärmetauschers zur Aufnahme der Wärme thermisch mit der Wärmequelle gekoppelt ist.

Vorteilhafterweise wird dadurch die Wärme der Wärmequelle sowie die durch die Auskühlung des Wärmesenkenrücklaufes mittels der Wärmepumpe gewonnene Wärme für die Wärmsenke, insbesondere für einen Wärmeverbraucher, bereitgestellt.

In einer weiteren vorteilhaften Ausgestaltung der Erfindung ist der Kondensator der Wärmepumpe mittels einer Bypassleitung thermisch mit dem Wärmesenkenrücklauf gekoppelt.

Dadurch kann vorteilhafterweise für die Wärmesenke eine erhöhte Wärmeleistung bereitgestellt werden.

In einer vorteilhaften Ausgestaltung der Erfindung ist die Wärmesenke Teil eines Fernwärmenetzes.

Vorteilhafterweise kann dadurch die thermische Leistung des Fernwärmenetzes erhöht werden.

Weiterhin ist es von Vorteil, wenn die Wärmequelle eine Geothermiequelle (geothermische Wärmequelle) und/oder eine industrielle Abwärmequelle ist.

Vorteilhafterweise kann dadurch die Temperatur des Wärmequellenrücklaufes der Geothermiequelle weiter reduziert werden, sodass die Geothermiequelle verbessert ausgekühlt und somit verbessert ausgebeutet werden kann. Für die industrielle Abwärmequelle können vorteilhafterweise aufwendige und kostenintensive Kühlvorrichtungen zur Abkühlung des Wärmequellenrücklaufes entfallen.

Gemäß einer vorteilhaften Weiterbildung der Erfindung ist die Wärmepumpe als Hochtemperaturwärmepumpe ausgebildet.

Als Hochtemperaturwärmepumpe wird eine Wärmepumpe bezeichnet, die eine Wärmebereitstellung an ihrem Kondensator oberhalb von 90 Grad Celsius, insbesondere oberhalb von 100 Grad Celsius, ermöglicht.

Vorteilhafterweise kann dadurch die Temperatur des Wärmesenkenvorlaufes weiter erhöht werden. Insbesondere kann die Temperatur des Wärmesenkenvorlaufes auf oberhalb von 90 Grad Celsius erhöht werden. Mit anderen Worten wird dadurch vorteilhafterweise die Wärmequelle bezüglich ihrer Temperatur weiter aufgewertet.

Zur Erreichung der genannten hohen Temperaturen ist es besonders bevorzugt, wenn die Wärmepumpe ein Arbeitsfluid mit R1233zd, R1336mzz, Botan, Cyclopentan und/oder mit einem Fluorketon und/oder einer Mischung aus den genannten Stoffen umfasst.

In einer vorteilhaften Weiterbildung der Erfindung weist die Wärmepumpe eine elektrische Leistung von wenigstens 1 Megawatt auf.

Vorteilhafterweise wird dadurch eine für industrielle Anwendungen ausreichend dimensionierte Wärmepumpe bereitgestellt. Insbesondere für ein Fernwärmenetz oder eine Rückführung der bereitgestellten Wärme in einen industriellen Prozess ist die genannte elektrische Leistung von Vorteil.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: eine Ausbeutung einer Wärmequelle mittels einer Wärmepumpe gemäß des Standes der Technik;
- Figur 2: eine andere Ausbeutung einer Wärmequelle mittels einer Wärmepumpe gemäß des Standes der Technik; und
- Figur 3: eine Vorrichtung gemäß der Erfindung.

Gleichartige, gleichwertige oder gleichwirkende Elemente können in den Figuren mit denselben Bezugszeichen versehen sein.

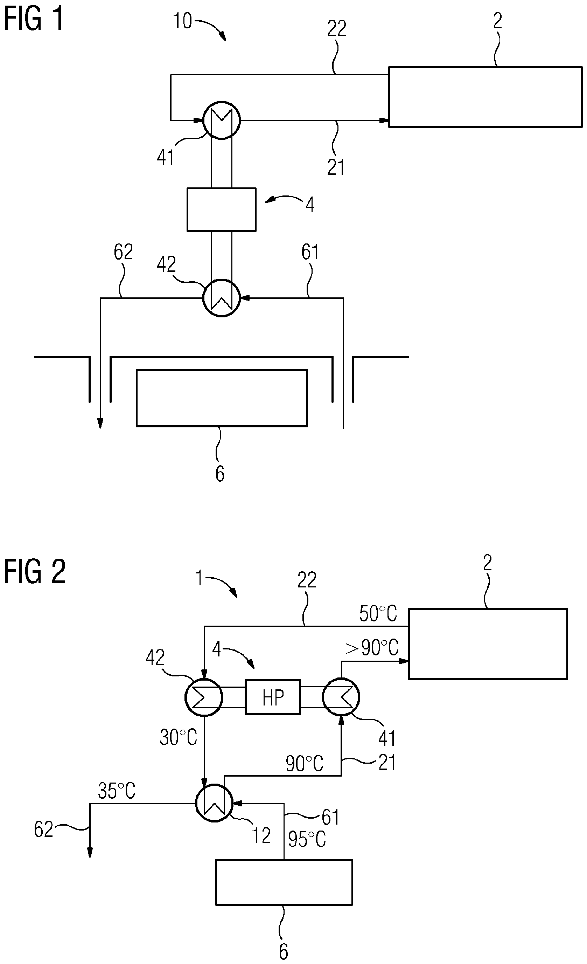

In Figur 1 ist die Ausbeutung der als Geothermiequelle 6 ausgebildeten Wärmequelle mittels einer Wärmepumpe 4 gemäß des Standes der Technik dargestellt. Die Ausbeutung der Geothermiequelle 6 erfolgt mittels einer bekannten Vorrichtung 10, die eine Wärmesenke 2 umfasst.

Die Wärmepumpe 4 umfasst wenigstens einen Kondensator 41 sowie einen Verdampfer 42. Bezüglich des Verdampfers 42 weist die Geothermiequelle 6 einen Wärmequellenvorlauf 61 sowie einen Wärmequellenrücklauf 62 auf. Hierbei ist die Temperatur des Wärmequellenrücklaufes 62 aufgrund der thermischen Kopplung mit dem Verdampfer 42 der Wärmepumpe 4 gegenüber der Temperatur des Wärmequellenvorlaufes 61 verringert. Mit anderen Worten wird Wärme von der Geothermiequelle 6 auf den Verdampfer 42 der Wärmepumpe 4 übertragen. Die Wärme wird durch die wenigstens teilweise Verdampfung des Arbeitsfluids innerhalb des Verdampfers 42 auf die Wärmepumpe 4 übertragen.

Die Wärmsenke 2 weist bezüglich der thermischen Kopplung mit dem Kondensator 41 der Wärmepumpe 4 einen Wärmesenkenvorlauf 21 sowie einen Wärmesenkenrücklauf 22 auf. Hierbei ist die Temperatur des Wärmesenkenrücklaufes 22 gegenüber der Temperatur des Wärmesenkenvorlaufes 21 verringert beziehungsweise die Temperatur des Wärmesenkenvorlaufes 21 gegenüber der Temperatur des Wärmesenkenrücklaufes 22 erhöht. Mit anderen Worten wird die Temperatur des Wärmequellenvorlaufes 61 mittels der Wärmepumpe 4 erhöht und an die Wärmesenke 2 durch ein Kondensieren des Arbeitsfluids innerhalb des Kondensators 41 über den Wärmesenkenvorlauf 21 abgegeben.

Ein Nachteil der bekannten Vorrichtung 10 ist, dass die Temperatur des Wärmequellenrücklaufes 62 nicht weiter reduziert oder ausgekühlt werden kann. Mit anderen Worten ist die Ausbeutung der Geothermiequelle 6 durch den Wärmeübertrag von der Geothermiequelle 6 auf die Wärmepumpe 4 beschränkt.

In Figur 2 ist eine andere Ausbeutung einer Wärmequelle mittels einer Wärmepumpe gemäß des Standes der Technik dargestellt.

Die Vorrichtung 1 umfasst eine Wärmepumpe 4 mit einem Kondensator 41 und einem Verdampfer 42. Weiterhin umfasst die Vorrichtung 1 eine Wärmequelle 6 und eine Wärmesenke 2, insbesondere einen Wärmeverbraucher, der besonders bevorzugt Teil eines Fernwärmnetzes ist, sowie einen Wärmetauscher 12.

Die Wärmepumpe 4 kann einen Verdichter und ein Expansionsventil aufweisen. Ein Arbeitsfluid der Wärmepumpe 4 wird mittels des Kondensators 41 wenigstens teilweise kondensiert, mittels des Verdichters wenigstens teilweise verdichtet, mittels des Verdampfers 42 wenigstens teilweise verdampft und mittels des Expansionsventils wenigstens teilweise entspannt. Als Arbeitsfluid kann bevorzugt R1233zd, R1336mzz, Botan, Cyclopentan und/oder ein Fluorketon und/oder einer Mischung aus den genannten Stoffen verwendet werden.

Die Wärmequelle 6 weist bezüglich des Wärmetauschers 12 einen Wärmequellenvorlauf 61 sowie einen Wärmequellenrücklauf 62 auf. Im dargestellten Ausführungsbeispiel ist die Temperatur des Wärmequellenvorlaufes 61 exemplarisch 95 Grad Celsius. Die Temperatur des Wärmequellenrücklaufes 62 beträgt exemplarisch 35 Grad Celsius.

Weiterhin weist die Wärmesenke 2 bezüglich des Wärmetauschers 12, der die Wärmequelle 6 thermisch mit der Wärmesenke 2 koppelt, einen Wärmesenkenvorlauf 21 sowie einen Wärmesenkenrücklauf 22 auf.

Der Kondensator 41 der Wärmepumpe 4 ist mit dem Wärmesenkenvorlauf 21 thermisch gekoppelt. Mit anderen Worten wird das Arbeitsfluid der Wärmepumpe 4 durch die genannte thermische Kopplung wenigstens teilweise kondensiert und die dabei freiwerdende Wärme an den Wärmesenkenvorlauf 21 übertragen. Hierbei erfolgt die genannte thermische Kopplung direkt nach dem Wärmetauscher 12.

Der Verdampfer 42 der Wärmepumpe 4 ist thermisch mit den Wärmesenkenrücklauf 22 gekoppelt. Mit anderen Worten wird Wärme dem Wärmesenkenrücklauf 22 mittels des Verdampfers 42 entzogen und mittels der Wärmepumpe 4 und dem Kondensator 41 auf den Wärmesenkenvorlauf 21 übertragen. Dadurch wird vorteilhafterweise der Wärmesenkenrücklauf 22 weiter ausgekühlt, sodass über die thermische Kopplung mittels des Wärmetauschers 12 die Wärmequelle 6 verbessert ausgebeutet werden kann.

Beispielsweise beträgt die Temperatur des Wärmequellenvorlaufes 61 in etwa 95 Grad Celsius [°C]. Direkt nach der thermischen Kopplung der Wärmequelle 6 mit der Wärmesenke 2 mittels des Wärmetauschers 12 weist der Wärmequellenrücklauf 62 eine Temperatur von annähernd 35 Grad Celsius auf. Der Wärmesenkenvorlauf 21 weist zwischen dem Wärmetauscher 12 und dem Kondensator 41 der Wärmepumpe 4, das heißt direkt nach dem Wärmetauscher 12 und direkt vor dem Kondensator 41 der Wärmepumpe 4, eine Temperatur von annähernd 90 Grad Celsius auf. Aufgrund der Aufnahme von Wärme mittels der Wärmepumpe 4 weist der Wärmesenkenvorlauf 21 direkt nach der thermischen Kopplung mit dem Kondensator 41 der Wärmepumpe 4 eine Temperatur größer als 90 Grad Celsius auf.

Die Wärmesenke 2 kann als Wärmeverbraucher ausgebildet sein und wenigstens einen Teil der ihr mittels des Wärmesenkenvorlaufes 21 zuführbaren Wärme verbrauchen oder verwenden. Dadurch weist der Wärmesenkenrücklauf 22 eine geringere Temperatur von annähernd 50 Grad Celsius auf. Somit liegt am Verdampfer 42 der Wärmepumpe 4 eine Temperatur von annähernd 50 Grad Celsius vor. Mittels des Verdampfers 42 der Wärmepumpe 4 wird dem Wärmesenkenrücklauf 22 weiter Wärme entzogen, sodass die Temperatur des Wärmesenkenrücklaufes 22 nach der thermischen Kopplung mit dem Verdampfer 42 der Wärmepumpe 4 annähernd 30 Grad Celsius ist. Anschließend wird der Wärmesenkenrücklauf 22 mit seiner Temperatur von annähernd 30 Grad Celsius zum Wärmetauscher 12 geleitet. Dort nimmt der Wärmesenkenrücklauf 22 wieder Wärme aus der Wärmequelle 6 auf und wird zum Wärmesenkenvorlauf 21 mit einer Temperatur von annähernd 90 Grad Celsius.

Besonders bevorzugt ist hierbei die Wärmequelle 6 als Geothermiequelle ausgebildet.

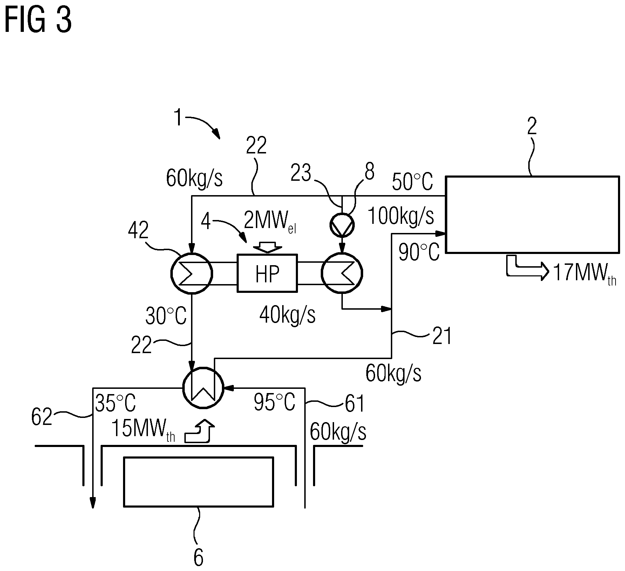

In Figur 3 ist die Vorrichtung 1 gemäß der der vorliegenden Erfindung dargestellt.

Hierbei weist die Vorrichtung 1 aus Figur 3 im Wesentlichen die gleichen Elemente wie die Vorrichtung aus Figur 2 auf, sodass das unter Figur 2 Gesagte unmittelbar auf die in Figur 3 dargestellte Vorrichtung 1 übertragen werden kann. Zusätzlich zu den in Figur 2 genannten beispielhaften Temperaturen sind in Figur 3 beispielhafte Massenströme [kg/s] sowie die zugeführten und abgeführten elektrischen und thermischen Leistung [MW] exemplarisch angegeben.

Der Wärmepumpe 4 wird beispielsweise eine elektrische Leistung von annähernd 2 Megawatt zugeführt. Die Wärmequelle 6, die in Figur 3 als Geothermiequelle ausgebildet ist, weist eine thermische Leistung von annähernd 15 Megawatt auf. Durch die Aufwertung der Wärme der Wärmequelle 6 mittels der erfindungsgemäß vorgesehenen Wärmepumpe 4 und deren Einbindung in den Wärmesenkenrücklauf 22 sowie Wärmesenkenvorlauf 21 kann für die Wärmesenke 2 eine thermische Leistung von annähernd 17 Megawatt bereitgestellt werden.

Im Gegensatz zur Figur 2 ist der Kondensator 41 der Wärmepumpe 4 mittels einer Bypassleitung 23 zusätzlich mit dem Wärmesenkenrücklauf 22 thermisch gekoppelt. Hierzu weist die Bypassleitung 23 eine Pumpe 8 auf, die ein Fluid des Wärmesenkenrücklaufes 22 wenigstens teilweise zum Kondensator 41 der Wärmepumpe 4 pumpt. Durch die dargestellte thermische Kopplung des Kondensators 41 der Wärmepumpe 4 mit dem Wärmesenkenrücklauf 22 kann die thermische Leistung, die für die Wärmesenke 2 bereitgestellt wird, erhöht werden. In der zweiten Ausgestaltung der Erfindung gemäß Figur 3 wird folglich im Wesentlichen die thermische Leistung für die Wärmesenke 2 erhöht. In der ersten Ausgestaltung der Erfindung gemäß Figur 2 wird hingegen im Wesentlichen die Temperatur für die Wärmesenke 2 erhöht.

Die weiteren Elemente der Vorrichtung 1 sind vergleichbar oder identisch zu den Elementen der Figur 2 angeordnet und/oder eingebunden, sodass das unter Figur 2 Gesagte ebenfalls auf die in Figur 3 dargestellte Vorrichtung 1 übertragen werden kann.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung,
der ausschließlich durch die unabhängigen Ansprüche definiert wird, zu verlassen.

## Patentansprüche

1. Vorrichtung (1) zur Erhöhung der Wärmeausbeute einer Wärmequelle (6), umfassend
- eine Wärmesenke (2) und eine Wärmepumpe (4) mit einem Kondensator (41) und einem Verdampfer (42);
- einen Wärmetauscher (12), der mit der Wärmequelle über einen Wärmequellenvorlauf (61) sowie einen Wärmequellenrücklauf (62) thermisch verbindbar ist,
wobei
- die Wärmesenke (2) einen Wärmesenkenvorlauf (21) und einen Wärmesenkenrücklauf (22) aufweist,
und die Wärmesenke (2) über den Wärmesenkenvorlauf (21) und den Wärmesenkenrücklauf (22) mit dem Wärmetauscher (12) verbunden und thermisch gekoppelt ist, und
- der Verdampfer (42) der Wärmepumpe (4) zur Wärmeaufnahme stromaufwärs des Wärmetauschers (12) thermisch mit dem Wärmesenkenrücklauf (22) gekoppelt ist,
**dadurch gekennzeichnet, dass**
die Vorrichrung eine Bypassleitung (23) aufweist,
wobei die Bypassleitung (23) einen Teil des Wärmesenkenrücklaufs (22) stromaufwärts des Verdampfers (42) abzweigt, mit dem Kondensator (41) der Wärmepumpe (4) thermisch gekoppelt ist und stromabwärs des Kondensators (41) mit dem Wärmesenkenvorlauf (21) zusammengeführt wird.

2. Vorrichtung (1) gemäß Anspruch 1, **dadurch gekennzeichnet, dass** diese die Wärmequelle (6) umfasst, wobei der Wärmesenkenrücklauf (22) nach dem Verdampfer (42) der Wärmepumpe (4) mittels des Wärmetauschers (12) zur Wärmeaufnahme thermisch mit der Wärmequelle (6) gekoppelt ist.

3. Vorrichtung (1) gemäß einem der vorhergehenden Ansprüche, **dadurch gekennzeichnet, dass** die Wärmesenke (2) Teil eines Fernwärmenetzes ist.

4. Vorrichtung (1) gemäß einem der Ansprüche 2 bis 3, **dadurch gekennzeichnet, dass** die Wärmequelle (6) eine Geothermiequelle und/oder eine industrielle Abwärmequelle ist.

5. Vorrichtung (1) gemäß einem der vorhergehenden Ansprüche, **dadurch gekennzeichnet, dass** die Wärmepumpe (4) als Hochtemperaturwärmepumpe ausgebildet ist.

6. Vorrichtung (1) gemäß Anspruch 5, **dadurch gekennzeichnet, dass** die Wärmepumpe (4) ein Arbeitsfluid mit R1233zd, R1336mzz, Butan, Cyclopentan und/oder mit einem Fluorketon und/oder einer Mischung aus den genannten Stoffen umfasst.

7. Vorrichtung (1) gemäß einem der vorhergehenden Ansprüche, **dadurch gekennzeichnet, dass** die Wärmepumpe (4) eine elektrische Leistung von wenigstens einem Megawatt aufweist.

8. Verfahren zur Erhöhung der Wärmeausbeute einer Wärmequelle (6) mit einer Vorrichtung (1) gemäß einem der vorhergehenden Ansprüche, umfassend die Schritte:
- Wärmeübertragen von der Wärmequelle (6) auf den Wärmesenkenrücklauf (22) mittels des Wärmetauschers (12);
- Wärmeübertragen von dem Wärmesenkenrücklauf (22) auf den Wärmesenkenvorlauf (21) mittels des Verdampfers (42) der Wärmepumpe (4) und dem Kondensator (41),
**gekennzeichnet dadurch, dass**
ein Teil des Wärmesenkenrücklaufs (22) stromaufwärts des Verdampfers (42) in die Bypassleitung (23) abgezweigt wird, und stromabwärz des Kondensators (41) mit dem Wärmesenkenvorlauf (21) zusammengeführt wird, wobei das Wärmeübertragen von dem Wärmesenkenrücklauf (22) auf den Wärmesenkenvorlauf (21) über die Bypassleitung (23) erfolgt.

## Claims

1. Device (1) for increasing the heat yield of a heat source (6), comprising
- a heat sink (2) and a heat pump (4) with a condenser (41) and with an evaporator (42);
- a heat exchanger (12) which is thermally connectable to the heat source via a heat-source feed line (61) and a heat-source return line (62),
wherein
- the heat sink (2) has a heat-sink feed line (21) and a heat-sink return line (22),
and the heat sink (2) is connected and thermally coupled to the heat exchanger (12) via the heat-sink feed line (21) and the heat-sink return line (22), and
- the evaporator (42) of the heat pump (4), for heat absorption, upstream of the heat exchanger (12), is thermally coupled to the heat-sink return line (22),
**characterized in that**
the device has a bypass line (23),
wherein the bypass line (23) branches off a part of the heat-sink return line (22) upstream of the evaporator (42), is thermally coupled to the condenser (41) of the heat pump (4) and, downstream of the condenser (41), is brought together with the heat-sink feed line (21).

2. Device (1) according to Claim 1, **characterized in that** said device comprises the heat source (6), wherein, after the evaporator (42) of the heat pump (4), the heat-sink return line (22) is thermally coupled to the heat source (6) by means of the heat exchanger (12) for heat absorption.

3. Device (1) according to either of the preceding claims, **characterized in that** the heat sink (2) is part of a district heating network.

4. Device (1) according to either of Claims 2 and 3, **characterized in that** the heat source (6) is a geothermal source and/or an industrial waste-heat source.

5. Device (1) according to one of the preceding claims, **characterized in that** the heat pump (4) is designed as a high-temperature heat pump.

6. Device (1) according to Claim 5, **characterized in that** the heat pump (4) comprises a working fluid comprising R1233zd, R1336mzz, butane, cyclopentane and/or comprising a fluoroketone and/or a mixture of the stated substances.

7. Device (1) according to one of the preceding claims, **characterized in that** the heat pump (4) has an electrical power of at least one megawatt.

8. Method for increasing the heat yield of a heat source (6) using a device (1) according to one of the preceding claims, comprising the steps of:
- transferring heat from the heat source (6) to the heat-sink return line (22) by means of the heat exchanger (12);
- transferring heat from the the heat-sink return line (22) to the heat-sink feed line (21) by means of the evaporator (42) of the heat pump (4) and the condenser (41), **characterized in that**
a part of the heat-sink return line (22), upstream of the evaporator (42), is branched off into the bypass line (23) and, downstream of the condenser (41), is brought together with the heat-sink feed line (21), wherein the transfer of heat from the heat-sink return line (22) to the heat-sink feed line (21) is realized via the bypass line (23).

## Revendications

1. Installation (1) pour augmenter le rendement thermique d'une source (6) de chaleur, comprenant
- un puits (2) de chaleur et une pompe (4) à chaleur ayant un condenseur (41) et un évaporateur (42) ;
- un échangeur (12) de chaleur, qui peut être relié thermiquement à la source de chaleur par une arrivée (61) de la source de chaleur ainsi que par un retour (62) à la source de chaleur,
dans lequel
- le puits (2) de chaleur a une arrivée (21) au puits de chaleur et un retour (22) du puits de chaleur,
et le puits (2) de chaleur est relié et couplé thermiquement à l'échangeur (12) de chaleur par l'arrivée (21) au puits de chaleur et le retour (22) du puits de chaleur, et
- l'évaporateur (42) de la pompe (4) à chaleur est, pour l'absorption de chaleur, couplé thermiquement au retour (22) du puits de chaleur en amont de l'échangeur (12) de chaleur,
**caractérisée en ce que**
l'installation a un conduit (23) de dérivation,
dans lequel le conduit (23) de dérivation fait bifurquer une partie du retour (22) du puits de chaleur en amont de l'évaporateur (42), est couplé thermiquement au condenseur (41) de la pompe (4) à chaleur et est réuni en aval du condenseur (41) à l'arrivée (21) au puits de chaleur.

2. Installation (1) suivant la revendication 1, **caractérisée en ce qu'**elle comprend la source (6) de chaleur, dans lequel le retour (22) au puits de chaleur est couplé thermiquement à la source (6) de chaleur pour l'absorption de chaleur, au moyen de l'échangeur (12) de chaleur après l'évaporateur (42) de la pompe (4) à chaleur.

3. Installation (1) suivant l'une des revendications précédentes, **caractérisée en ce que** le puits (2) de chaleur est une partie d'un réseau de chaleur à grande distance.

4. Installation (1) suivant l'une des revendications 2 à 3, **caractérisée en ce que** la source (6) de chaleur est une source de géothermie et/ou une source de chaleur perdue industrielle.

5. Installation (1) suivant l'une des revendications précédentes, **caractérisée en ce que** la pompe (4) à chaleur est constituée sous la forme d'une pompe à chaleur à haute température.

6. Installation (1) suivant la revendication 5, **caractérisée en ce que** la pompe (4) à chaleur comprend un fluide de travail ayant du R1233zd, du R1336mzz, du butane, du cyclopentane et/ou ayant une cétone fluorée et/ou un mélange des dites substances.

7. Installation (1) suivant l'une des revendications précédentes, **caractérisée en ce que** la pompe (4) à chaleur a une puissance électrique d'au moins un mégawatt.

8. Procédé pour augmenter le rendement thermique d'une source (6) de chaleur par une installation (1) suivant l'une des revendications précédentes, comprenant les stades :
- transmission de chaleur de la source (6) de chaleur au retour (22) du puits de chaleur, au moyen de l'échangeur (12) de chaleur ;
- transmission de chaleur du retour (22) du puits de chaleur à l'arrivée (21) au puits de chaleur, au moyen de l'évaporateur (42) de la pompe (4) à chaleur et du condenseur (41), **caractérisé en ce que** l'
on dérive dans le conduit (23) de dérivation en amont de l'évaporateur (42), une partie du retour (22) au puits de chaleur et on la réunit à l'arrivée (21) au puits de chaleur en aval du condenseur (41), dans lequel le transfert de chaleur du retour (22) au puits de chaleur à l'arrivée (21) au puits de chaleur, s'effectue par le conduit (23) de dérivation.
